# EUROPÄISCHE PATENTSCHRIFT

(11) **EP 3 663 080 B1**
(45) Veröffentlichungstag und Bekanntmachung des Hinweises auf die Patenterteilung: **22.09.2021**
(21) Anmeldenummer: 19171853.5
(22) Anmeldetag: 30.04.2019
(51) Int. Cl.: B31B 70/10, B31B 70/64, B29C 65/00, B31B 70/81, B31B 155/00, B31B 170/20, B31B 160/20, B31B 170/10, B29C 65/02, B29L 31/00, B65D 30/14

(54) **VERFAHREN UND VORRICHTUNG ZUM HERSTELLEN VON FOLIENBEUTELN**
DEVICE AND METHOD FOR MANUFACTURING FILM BAGS
PROCÉDÉ ET DISPOSITIF DE FABRICATION DE SACHETS EN FEUILLE

(30) Priorität: 06.12.2018 DE 102018131211
(43) Veröffentlichungstag der Anmeldung: 10.06.2020
(73) Patentinhaber: B&B Verpackungstechnik GmbH, 48496 Hopsten (DE)
(72) Erfinder: Bruns, Thomas, 49545 Tecklenburg (DE); Lüttmann, Peter, 48496 Hopsten (DE)
(74) Vertreter: Jabbusch, Matthias

(56) Entgegenhaltungen:
- US-A- 2 815 620
- US-A1- 2006 045 393
- US-A1- 2006 133 701

## Beschreibung

Die Erfindung betrifft ein Verfahren zum Herstellen von Folienbeuteln nach dem Oberbegriff des Patentanspruchs 1 und eine Vorrichtung zum Herstellen von Folienbeuteln nach dem Patentanspruch 6.

Der verfahrensgemäß herzustellende Folienbeutel soll aus lediglich zwei unterschiedlichen Folien in Sandwichweise hergestellt werden, um den Folienbeutel auf einfache Weise recyceln zu können. Ein derartiger Folienbeutel ist aus EP 3 168 169 A1 bekannt. Dieser Folienbeutel weist viele Vorteile gegenüber zuvor bekannten Folienbeuteln auf. Leider kann ein derartiger Folienbeutel mit bekannten Herstellverfahren für Folienbeutel nicht ohne weiteres hergestellt werden. Insbesondere bei Verwendung eines Monomaterials wie Polyethylen für den Innenbeutel dehnt sich die Folienbahn bei Erwärmung aus, was den Bahnvorzug im Verarbeitungsprozess sehr erschwert. Darüber hinaus soll auch wenigstens ein bedrucktes Deckblatt an dem Folienbeutel angeordnet werden, welches jedoch im Recyclingprozess wieder vollständig vom Innenbeutel abgetrennt werden können muss.

Ein gattungsgemäßes Verfahren zum Herstellen von Folienbeuteln und ein damit hergestellter Folienbeutel sind aus US 2006/133701 A1 bekannt. Dabei werden eine Folienbahn mit einer Vielzahl von Beutelabschnitten und eine Deckblattbahn mit einer Vielzahl von Deckblättern ausgebildet. Die Deckblattbahn wird in Anlage zur Folienbahn gebracht und mittels Querverbindungen an der Folienbahn befestigt. Daraus werden dann einzelne Folienbeutel mit jeweils einem Deckblatt und mit einem Innenbeutel herausgetrennt.

Weitere Verfahren zum Herstellen von Folienbeuteln, bei denen Deckblätter aus einer Deckblattbahn mit Beutelabschnitten einer Folienbahn verbunden werden, sind aus US 2 815 620 A und US 2006/045393 A1 bekannt.

Der Erfindung liegt die Aufgabe zugrunde, ein Verfahren und eine Vorrichtung zum Herstellen eines recyclebaren Folienbeutels anzugeben, bei dem das Deckblatt auf einfache Weise vom Innenbeutel abgezogen werden kann.

Die Erfindung löst diese Aufgabe mit einem Verfahren nach dem Patentanspruch 1 und mit einer Vorrichtung nach dem Patentanspruch 6. Vorteilhafte Ausgestaltungen der Erfindung sind in den Unteransprüchen angegeben.

Bei einem Verfahren zum Herstellen von Folienbeuteln, wobei in einer Folienbahn eine Vielzahl von miteinander verbundenen Beutelabschnitten ausgebildet wird, wobei in wenigstens einer Deckblattbahn eine Vielzahl von miteinander verbundenen bedruckten Deckblättern ausgebildet wird, wobei die Deckblattbahn derart in Anlage zur Folienbahn gebracht wird, dass jedes Deckblatt passgenau auf genau einem zugeordneten Beutelabschnitt zu liegen kommt, wobei jedes Deckblatt mittels Deckblattverbindungen mit dem jeweils zugeordneten Beutelabschnitt verbunden wird, wobei die Deckblattverbindungen 7, 8, 29) Querverbindungen (7) in den jeweiligen Seitenbereichen der Deckblätter (5, 6) aufweisen, und wobei einzelne Folienbeutel mit jeweils wenigstens einem Deckblatt und mit einem aus dem jeweils zugeordneten Beutelabschnitt gebildeten Innenbeutel aus den miteinander verbundenen Bahnen herausgetrennt werden ist erfindungswesentlich vorgesehen, dass die Deckblattverbindungen (7, 8, 29) Punktverbindungen (8) im jeweiligen Bodenbereich der Deckblätter (5, 6) und jeweils eine Längsverbindung (29) im jeweiligen Kopfbereich der Deckblätter (5, 6) aufweisen.

Damit werden Folienbeutel hergestellt, bei denen nach der Nutzung in einem Recyclingprozess die Deckblätter von den Innenbeuteln rückstandsfrei gelöst werden können, so dass der Rohstoff, aus welchem die Innenbeutel hergestellt sind, sortenrein aus den Innenbeuteln zurückgewonnen und wiederverwertet werden kann.

Die Innenbeutel sind insbesondere flüssigkeitsdicht. Die Folienbeutel können daher beispielsweise als Verpackung für flüssige Reinigungsmittel wie Waschmittel verwendet werden. Weiter bestehen die Innenbeutel vorzugsweise aus einem Monomaterial, insbesondere aus einem Polyethylenmonomaterial. Hierbei besteht auch die Folienbahn aus dem Polyethylenmonomaterial. Dadurch können die Innenbeutel sortenrein recycelt werden. Weiter wird in jedem Beutelabschnitt der Folienbahn vorteilhafterweise ein Standboden für den jeweiligen Folienbeutel ausgebildet.

Die Deckblattverbindungen sind besonders bevorzugt Schweißungen. Alternativ sind die Deckblattverbindungen Klebeverbindungen. Die Deckblattverbindungen, insbesondere Schweißungen, mittels denen die Deckblattbahn mit der Folienbahn verbunden wird, sind insbesondere derart ausgeführt, dass jedes Deckblatt im Recyclingprozess auf einfache Weise von dem aus dem zugeordneten Beutelabschnitt gebildeten Innenbeutel abgezogen werden kann.

Die Deckblattverbindungen weisen Querverbindungen, insbesondere Querschweißungen in den jeweiligen Seitenbereichen der Deckblätter, insbesondere im Bereich der Längsseiten der Deckblätter, auf. Zusätzlich weisen die Deckblattverbindungen Punktverbindungen, insbesondere Punktschweißungen, im jeweiligen Bodenbereich der Deckblätter auf. Zusätzlich weisen die Deckblattverbindungen jeweils eine Längsverbindung, insbesondere Längsschweißung, im jeweiligen Kopfbereich der Deckblätter auf. Die Querverbindungen sind quer zur Vorzugsrichtung und die Längsverbindungen längs zur Vorzugsrichtung der Folienbahn angeordnet.

Vorteilhafterweise werden die Folienbeutel nach dem Verbinden der Deckblätter mit den Beutelabschnitten ausgeformt. Die Deckblätter bleiben dabei vorzugsweise unangetastet. Hierfür sind die Deckblätter entsprechend von Bereichen der Beutelabschnitte beabstandet, in welche Schnitte oder Ausstanzungen oder sowohl Schnitte als auch Ausstanzungen zum Ausformen der Folienbeutel eingebracht werden sollen.

Vorteilhafterweise besäumt ein Längsschneider die herzustellenden Folienbeutel am Boden. Weiter ist bevorzugt vorgesehen, dass ein Stanzwerkzeug mittels Ausstanzen abgerundete Ecken am herzustellenden Folienbeutel erzeugt. Das Stanzwerkzeug entfernt hierbei die bei vorherigen Schnitten entstandenen spitzen Ecken. Weiter ist bevorzugt vorgesehen, dass ein Stanzwerkzeug mittels Ausstanzen einen Griffbereich erzeugt. Der Griffbereich ist im Kopfbereich des herzustellenden Folienbeutels angeordnet.

Bei einer vorteilhaften Ausführungsform des Verfahrens ist vorgesehen, dass zur gleichzeitigen Herstellung von jeweils zwei Folienbeuteln in der Folienbahn zwei in Vorzugsrichtung der Folienbahn nebeneinander liegende Beutelabschnittsbahnen mit, insbesondere miteinander verbundenen, Beutelabschnitten ausgebildet werden. Weiter ist vorzugsweise vorgesehen, dass in der Deckblattbahn zwei in Vorzugsrichtung nebeneinander liegende Bahnen mit Deckblättern ausgebildet werden. Die Deckblätter werden mit den Beutelabschnitten verbunden. Die Beutelabschnittsbahnen weisen daher nachfolgend auch die, insbesondere ebenfalls miteinander verbundenen, Deckblätter auf. Dank der größeren Breite der Bahnen, also der Beutelabschnittsbahn und der Deckblattbahn, ist jeweils eine stabilere Bahnführung gegeben. Außerdem kann dadurch gegenüber lediglich hintereinander angeordneten Beutelabschnitten und Deckblättern in gleicher Zeit die doppelte Anzahl Folienbeutel hergestellt werden.

Bei einer besonders vorteilhaften Ausführungsform der Erfindung ist vorgesehen, dass nach den Verbinden der Deckblätter mit den Beutelabschnitten, insbesondere zum bereichsweisen Ausformen der Folienbeutel, durch Schnitte oder durch Ausstanzungen oder durch Schnitte und Ausstanzungen im Kopfbereich der miteinander verbundenen Beutelabschnitte, also insbesondere der herzustellenden Folienbeutel, ein Längsbeschnittstreifen zwischen zwei Beutelabschnittsbahnen erzeugt wird und dass der Längsbeschnittstreifen nachfolgend, insbesondere zur Trennung der Bahnen voneinander, abgesaugt wird. Die Folienbeutel werden dabei im Kopfbereich sauber voneinander getrennt. Der abgesaugte Längsbeschnittstreifen kann eingeschmolzen und wieder dem Produktionsprozess, also insbesondere der Herstellung der Folienbahn, zugeführt werden.

Weiter ist bevorzugt vorgesehen, dass ein Querschneider die Folienbeutel jeder Bahn mittels eines Trennschnittes voneinander trennt. Der Verschnitt wird hierbei vorzugsweise abgesaugt und kann ebenfalls wieder verwendet werden.

Bei einer vorteilhaften Ausführungsform des Verfahrens werden an jedem Deckblatt Aussparungen, insbesondere in Form von Ausstanzungen oder Deckblattbahnausstanzungen, ausgebildet, um Beutelabschnitte nur unvollständig zu bedecken. Dadurch bleiben insbesondere Bereiche um einen Ausgießer und um einen Tragegriff am Innenbeutel vom Deckblatt unbedeckt. Ein derartiger Tragegriff wird vorzugsweise in jedem Beutelabschnitt ausgebildet. Darüber hinaus wird vorzugsweise in jedem Beutelabschnitt der Ausgussbereich ausgebildet. Insbesondere wird in jedem Innenbeutel ein Ausgießer ausgebildet. Alternativ wird in jedem Innenbeutel ein Ausgießer eingefügt. Der Ausgießer weist beispielsweise einen Ausgießbereich mit Außengewinde auf, welcher mittels einer Kappe, die einen Innengewinde aufweist, verschlossen wird.

Die Deckblattbahn, welche die Deckblätter bereitstellt, wird vorzugsweise auf der Außenseite oder auf der Innenseite bedruckt, bevor sie in Anlage zur Folienbahn gebracht wird. Dadurch werden Produktinformationen sichtbar am Folienbeutel bereitgestellt. Der Innenbeutel ist hingegen vorzugsweise frei von jeglicher Bedruckung oder Einfärbung, um die sortenreine Nutzung im Recyclingprozess sicherstellen zu können.

Vorteilhafterweise wird die Folienbahn in definierten Abschnitten mit jeweils einer Druckmarke versehen. Der Bahnvorzug wird hierbei mittels dieser Druckmarken geregelt. Die Abschnitte mit den Druckmarken werden, vorteilhafterweise nach dem Zusammenführen der Beutelabschnittsbahn mit der Deckblattbahn, durch einen Randbeschnitt der Beutelabschnittsbahn entfernt. Der fertiggestellte Folienbeutel weist die mit Druckmarken versehenen Abschnitte der Folienbahn somit nicht mehr auf und kann sortenrein recycelt werden.

Vorzugsweise ist ein Vorzugsrollenpaar für den Vorzug der Folienbahn verantwortlich. Ein Vorzugsweg der Folienbahn wird dabei in Abhängigkeit vom Sensorsignal eines Bahnkantensensors gesteuert, der insbesondere mit den Druckmarken zusammenwirkt. Insbesondere zwischen den einzelnen Verarbeitungsschritten, bei denen der Bahnvorzug der Folienbahn gestoppt wird, wird die Flachbahn mittels des Vorzugrollenpaares vorgezogen. Wenn die hierbei mittels den Sensorsignalen festgestellte Ist-Position wenigstens einer Druckmarke von einer Soll-Position der jeweiligen Druckmarke abweicht, wird der Vorzugsweg des Bahnvorzugs gegebenenfalls angepasst.

Weiter erfolgt der Bahnvorzug der Folienbahn vorzugsweise mittels einer elektromotorischen Schwenkvorrichtung. Insbesondere wird der Bahnvorzug mittels der Schwenkvorrichtung gesteuert. Die Schwenkvorrichtung stellt einen Winkel ein, welchen das Vorzugsrollenpaar relativ zur Bahnlaufrichtung einnimmt. Im optimalen Fall muss das Vorzugsrollenpaar im 90° Winkel zur Bahnlaufrichtung stehen. Wenn die Folienbahn hingegen seitlich zur vorgesehenen Vorzugsrichtung wandert, wird dieses durch den Bahnkantensensor oder durch einen anderen Bahnkantensensor erkannt. In Erwiderung darauf wird das Rollenpaar im Winkel zur Folienbahn verstellt und dadurch die Folienbahn seitlich zurückgeführt.

Zwei Deckblattbahnen zur Herstellung der Deckblätter sind vorzugsweise zunächst nebeneinander in einer äußeren Flachbahn angeordnet. Dabei ist vorgesehen, dass zur Herstellung der zwei Deckblattbahnen aus dieser äußeren Flachbahn Abschnitte ausgestanzt und entfernt werden und dass aus der äußeren Flachbahn nachfolgend durch einen Längsschnitt die zwei Deckblattbahnen separiert werden. Dadurch können vorteilhaft zugleich mittels eines Stanzwerkzeuges Bereiche aus der äußeren Flachbahn herausgetrennt werden, welche teilweise jeweils einer der beiden Deckblattbahnen zugeordnet sind, so dass beispielsweise Ecken im Kopfbereich der aus beiden Deckblattbahnen herzustellenden Deckblätter erzeugt werden.

Die Deckblattbahnen werden vorzugsweise mit Druckmarken bedruckt. Der Vorzug der Deckblattbahnen wird dann vorzugsweise mittels dieser Druckmarken geregelt, insbesondere entsprechend der vorstehend beschriebenen Regelung des Vorzugs der mit Druckmarken bedruckten Folienbahnen. Dadurch können die Folienbahnen und die Deckblattbahnen passgenau aufeinander geführt werden.

Die Folienbahn ist im Verarbeitungsprozess vorzugsweise zunächst eine Flachbahn, die zu einem Seitenfaltenschlauch geformt wird. In Randbereichen des Seitenfaltenschlauches liegen somit vier Lagen der Folienbahn übereinander, nämlich zwei äußere Lagen und dazwischen zwei innere Lagen, die von Seitenfalten gebildet sind. Dazwischen liegen nur zwei Lagen der Folienbahn, nämlich zwei äußere Lagen, übereinander. In einem Überlappungsbereich der Seitenränder der Folienbahn erhöht sich gegebenenfalls die Anzahl der übereinanderliegenden Lagen um eine weitere Lage.

Der Produktionsprozess ist vorzugsweise getaktet. Im Produktionsprozess wird die Folienbahn mit einem ersten Vorzugsweg wenigstens einer ersten Arbeitsstation zugeführt. Wenigstens zwei Lagen, insbesondere übereinanderliegende Lagen, der Folienbahn werden in dieser ersten Arbeitsstation in wenigstens einem ersten Arbeitsschritt miteinander verschweißt. Nachfolgend wird vorzugsweise die Folienbahn mit einem zweiten Vorzugsweg wenigstens einer zweiten Arbeitsstation zugeführt und werden in dieser zweiten Arbeitsstation in wenigstens einem zweiten Arbeitsschritt die in der Folienbahn ausgebildeten Abschnitte voneinander getrennt. Bei einer vorteilhaften Ausführungsform der Erfindung ist vorgesehen, dass eine Taktung zwischen dem ersten Arbeitsschritt und dem zweiten Arbeitsschritt derart verändert wird, dass der erste Vorzugsweg ein ganzzahliges Vielfaches des zweiten Vorzugsweges ist und dass die Häufigkeit der Bahnvorzüge zur zweiten Arbeitsstation gegenüber der Häufigkeit der Bahnvorzüge zur ersten Arbeitsstation dieses ganzzahlige Vielfache beträgt.

Dadurch können im ersten Arbeitsschritt, also in der ersten Arbeitsstation, zwei in Längsrichtung der Folienbahn hintereinander angeordnete Abschnitte der Folienbahn gleichzeitig geschweißt oder auf andere Weise verarbeitet werden. Dadurch wird Zeit nach dem Schweißen gewonnen, in welcher die Folienbahn abkühlen kann, um dadurch zugstabil weitertransportiert werden zu können. Denn die Erwärmung, insbesondere von Polyethylenmonofolien, führt zu einer Aufweichung der Folienbahn, welche einem zugstabilen Weitertransport entgegenwirken würde. Derartige Abkühlzeiten sind hingegen im zweiten Arbeitsschritt, also insbesondere beim Schneiden und Stanzen, nicht notwendig. Daher wird der Takt, vorzugsweise mittels eines Tänzer-Vorzugssystems, verändert, so dass nur noch einzelne Beutelabschnitte zur gleichen Zeit, dafür jedoch mit doppelter Geschwindigkeit verarbeitet werden. Hierdurch werden Schneidwerkzeuge und Stanzwerkzeuge eingespart. Das ganzzahlige Vielfache, mit welchem die Vorzugswege und die Bahnvorzüge geändert werden, beträgt vorzugsweise zwei. Bei einer anderen Ausführungsform der Erfindung beträgt das ganzzahlige Vielfache drei.

Gemäß einer vorteilhaften Ausführungsform der Erfindung ist vorgesehen, dass eine Schweißvorrichtung zum Verschweißen von wenigstens zwei aneinander anliegenden Lagen der Folienbahn miteinander von einer Warteposition in eine Arbeitsposition bewegt wird. Dabei ist insbesondere vorgesehen, dass die in ihrer Arbeitsposition befindliche Schweißvorrichtung nachfolgend die aneinander anliegenden Lagen der Folienbahn mittels Hitze miteinander verschweißt. Weiter ist vorzugsweise vorgesehen, dass die Schweißvorrichtung nach dem Schweißvorgang wieder in die Warteposition zurückbewegt wird. Der Abstand zwischen der Schweißvorrichtung und der Folienbahn, insbesondere senkrecht zur Oberfläche der Folienbahn, ist in der Warteposition größer ist als in der Arbeitsposition. Dadurch ist die Hitzeeinwirkung auf die Folienbahn, wenn gerade nicht geschweißt werden soll, verringert. Dies ist wichtig, um die Folienbahn zugstabil zu halten. Das Bewegen der Schweißvorrichtung erfolgt dabei vorzugsweise elektromotorisch.

Die Schweißvorrichtung wird vorzugsweise senkrecht zur Oberfläche der Folienbahn von der Folienbahn, insbesondere von der Arbeitsposition in die Warteposition oder von der Warteposition in die Arbeitsposition, bewegt.

Bei einer vorteilhaften Ausführungsform der Erfindung ist vorgesehen, dass die Schweißvorrichtung in Erwiderung auf eine Produktionsunterbrechung von der Warteposition in eine Parkposition bewegt wird. Der Abstand zwischen der Schweißvorrichtung und der Folienbahn, insbesondere senkrecht zur Oberfläche der Folienbahn, ist in der Parkposition vorzugsweise nochmals größer als in der Warteposition. Alternativ und/oder zusätzlich wird die Schweißvorrichtung in Erwiderung auf eine Produktionsunterbrechung vorzugsweise senkrecht zur Vorzugsrichtung der Folienbahn und parallel zur Oberfläche der Folienbahn von der Folienbahn wegbewegt, insbesondere von der Warteposition in die Parkposition.

Alternativ oder zusätzlich ist in Erwiderung auf eine Produktionsunterbrechung, insbesondere nachdem die Schweißvorrichtung in die Parkposition gefahren wurde, vorzugsweise vorgesehen, dass eine Abschirmung zwischen die Schweißvorrichtung und die Folienbahn eingefahren wird, um mittels der Abschirmung die Folienbahn von Wärmestrahlungen, die von der Schweißvorrichtung ausgehen, abzuschirmen.

Bei einer besonders vorteilhaften Ausführungsform des Verfahrens zum Herstellen von Folienbeuteln ist vorgesehen, dass zwischen die inneren Lagen der Folienbahn eine Zwischenlage, insbesondere aus Teflon, eingebracht wird. Die Zwischenlage sorgt dafür, dass die inneren Lagen nicht miteinander verschweißt werden und nachfolgend jede dieser inneren Lagen nur mit der an der jeweiligen inneren Lage anliegenden äußeren Lage verschweißt wird. Die inneren Lagen sind insbesondere in den Seitenfalten der zu einem Seitenfaltenschlauch geformten Folienbahn angeordnete Abschnitte des Folienschlauches.

Das Verschweißen der inneren Lagen mit den äußeren Lagen erfolgt vorzugsweise gleichzeitig. Insbesondere werden die inneren Lagen, zwischen denen die jeweilige Zwischenschicht eingebracht ist, vorzugsweise zugleich in einem Schweißvorgang mit der an der jeweiligen inneren Lage anliegenden äußeren Lage verschweißt. Äußere Lagen, die direkt aneinander anliegen und miteinander verschweißt werden, liegen vorzugsweise auch an einer Zwischenlage an, insbesondere auf einer Zwischenlage auf.

Weiter ist bevorzugt vorgesehen, dass die jeweilige Zwischenlage, insbesondere nach dem Schweißen, für eine gemeinsame Bewegung mit den inneren Lagen der Folienbahn, zwischen denen die jeweilige Zwischenlage angeordnet ist, oder für die gemeinsame Bewegung mit der Lage, die mit einer anderen Lage verschweißt wird und dabei zwischen der Zwischenlage und dieser anderen Lage angeordnet ist, zusammen mit der Folienbahn, also zusammen mit den Lagen der Folienbahn, mitgezogen wird. Dadurch wird einer Beschädigung der Folienbahn durch die möglicherweise nach dem Schweißvorgang an der Folienbahn haftenden Zwischenlage beim Abziehen dieser Zwischenlage entgegengewirkt. Vorzugsweise ist daher weiter vorgesehen, dass jede Zwischenlage zum sanften Lösen von den inneren Lagen der Folienbahn, zwischen denen die jeweilige Zwischenlage angeordnet ist, oder von der an der Zwischenlage anliegenden Lage der Folienbahn während der gemeinsamen Bewegung an wenigstens einer Umlenkung umgelenkt wird. Jede Umlenkung ist vorteilhafterweise als Rolle ausgebildet, deren Drehachse in einem Winkel von 45° zur Vorzugsrichtung der Folienbahn angeordnet ist.

Jede Zwischenlage ist bei besonders bevorzugten Ausführungsformen der Erfindung als Band ausgebildet. Das Band ist insbesondere ein Teflonband oder aus einem anderen hitzebeständigem Material gebildet, von welchem die inneren Lagen leicht lösbar sind. Vorzugsweise laufen die als Band ausgebildeten Zwischenlagen beabstandet voneinander und parallel zur Vorzugsrichtung der Folienbahn mit der Folienbahn mit. Insbesondere sind die jeweils paarweise miteinander zu verschweißenden inneren Lagen und äußeren Lagen in jeweils einem Segment der Folienbahn angeordnet, welches schmaler als die Breite der Folienbahn ist. Vorzugsweise ist jedem Segment jeweils eine der Zwischenlagen zugeordnet.

Gemäß einer vorteilhaften Ausführungsform der Erfindung werden aneinander anliegende Lagen der Folienbahn derart miteinander verschweißt, dass wenigstens eine Längsschweißnaht, welche in Vorzugsrichtung der Folienbahn verläuft und diese aneinander anliegenden Lagen miteinander verbindet, hergestellt wird. Vorzugsweise wird im Bereich jeder Kante jeder Seitenfalte jeweils eine Längsschweißnaht hergestellt, insbesondere in Form einer Siegelnaht. Die Seitenfalten bilden die Böden der herzustellenden Folienbeutel aus.

Gemäß einer weiteren vorteilhaften Ausführungsform der Erfindung werden aneinander anliegende Lagen der Folienbahn derart miteinander verschweißt, dass Eckschweißnähte der Folienbahn, welche schräg zur Vorzugsrichtung verlaufen und diese aneinander anliegenden Lagen miteinander verbinden, zum Abtrennen von Ecken hergestellt werden. Die abzutrennenden Ecken befinden sich insbesondere im Kopfbereich und/oder im Fußbereich des herzustellenden Folienbeutels. Im Kopfbereich des herzustellenden Folienbeutels wird gemäß einer vorteilhaften Ausführungsform der Erfindung ein Griffbereich ausgebildet sowie nach dem Ausbilden der einzelnen Innenbeutel, insbesondere nach dem Befüllen der Folienbeutel, ein Ausgießer zwischen Lagen der Folienbahn eingebracht, die dann mittels Schweißungen mit dem Ausgießer verbunden werden.

Bei einer besonders bevorzugten Ausführungsform der Erfindung werden aneinander anliegende Lagen der Folienbahn derart miteinander verschweißt, dass Quernähte, welche quer zur Vorzugsrichtung der Folienbahn verlaufen und diese aneinander anliegenden Lagen miteinander verbinden, hergestellt werden. Im Bereich der Seitenfalten verbinden die Quernähte gegebenenfalls vier Lagen miteinander, nämlich zwei innere Lagen der Seitenfalten und zwei äußere Lagen, welche von der Vorderseite und der Rückseite des herzustellenden Seitenfaltenbeutels bereitgestellt werden. Die Quernähte bilden Seitenkanten der herzustellenden Folienbeutel aus und erstrecken sich zumindest zwischen dem Kopfbereich und dem Fußbereich des Folienbeutels, insbesondere zumindest zwischen Ecknähten im Fußbereich und Ecknähten oder Öffnungen im Kopfbereich des Folienbeutels.

Bei einer vorteilhaften Ausführungsform des erfindungsgemäßen Verfahrens ist eine weitere Maßnahme vorgesehen, die dafür sorgt, dass die Folienbahn sich nicht so stark erhitzt, dass der Transport der Folienbahn im Produktionsprozess beeinträchtigt werden würde. Insbesondere beim Einbringen von quer zur Vorzugsrichtung der Folienbahn verlaufenden Schweißnähten könnte unmittelbar nach dem Schweißvorgang die Aufnahme von Zugkräften in Vorzugsrichtung der Folienbahn beeinträchtigt sein. Vorteilhafterweise ist daher vorgesehen, dass die Lagen der Folienbahn, die quer zur Vorzugsrichtung miteinander verschweißt werden sollen, in einem ersten Schweißvorgang nur in wenigstens einem ersten Segment miteinander verschweißt werden und in einem zweiten Schweißvorgang in wenigstens einem an das erste Segment anschließenden zweiten Segment miteinander verschweißt werden. Vorteilhafterweise werden schräg zur Vorzugsrichtung verlaufende Schweißungen, welche im selben Segment wie die quer zur Vorzugsrichtung verlaufenden Schweißungen hergestellt werden, zugleich in einem Schweißvorgang hergestellt.

Das wenigstens eine erste Segment und das zweite Segment bilden bevorzugt die gesamte Breite der Folienbahn ab, so dass in zwei Schritten eine durchgehende quer zur Vorzugsrichtung verlaufende Schweißnaht hergestellt wird. Dadurch, dass zur selben Zeit lediglich in Segmenten die Lagen miteinander verschweißt werden, können Bereiche außerhalb dieser Segmente die notwendigen Zugkräfte für den Vorzug der Folienbahn aufnehmen. Insbesondere sind zwei erste Segmente in den äußeren Bereichen der Folienbahn, welche insbesondere zumindest die Seitenfalten überdecken, angeordnet, wohingegen das zweite Segment zwischen den äußeren Segmenten, insbesondere beabstandet von den Seitenfalten, in der Folienbahn angeordnet ist. Entweder erfolgt zuerst der erste Schweißvorgang und danach der zweite Schweißvorgang. Alternativ erfolgt zuerst der zweite Schweißvorgang und danach der erste Schweißvorgang.

Die Erfindung betrifft weiter eine Vorrichtung zum Herstellen von Folienbeuteln. Diese Vorrichtung weist Mittel zur Durchführung des erfindungsgemäßen Verfahrens auf und weist dabei insbesondere die in der vorstehenden Beschreibung und/oder in den Ansprüchen genannten Vorrichtungsmerkmale wie Arbeitsstationen, Schweißvorrichtungen, Schnittvorrichtungen und Stanzwerkzeuge auf.

Weitere Ausführungsformen der erfindungsgemäßen Verfahren sowie der erfindungsgemäßen Vorrichtungen ergeben sich aus den Ansprüchen, aus den Zeichnungen sowie aus der nachfolgenden Beschreibung eines in den Zeichnungen dargestellten bevorzugten Ausführungsbeispiels der Erfindung. In den Zeichnungen zeigen:
- Fig. 1:: eine zur Herstellung eines Seitenfaltenschlauches gefaltete Folienbahn gemäß einem Ausführungsbeispiel der Erfindung mit Seitenfalten in einer Schnittansicht auf eine senkrecht zur Vorzugsrichtung der Folienbahn angeordneten Schnittebene;
- Fig. 2:: die gefaltete Folienbahn von Fig. 1 zusammen mit drei jeweils als mitlaufendes Teflonband ausgebildeten Zwischenlagen beim Herstellen von in Vorzugsrichtung der Folienbahn verlaufenden Längsschweißnähten und beim Schließen des Seitenfaltenschlauches in einer Draufsicht;
- Fig. 3:: die zum Seitenfaltenschlauch geschlossene Folienbahn von den Fig. 1 und 2 zusammen mit zwei der mitlaufenden Zwischenlagen aus Fig. 2 beim Herstellen von diagonal zur Vorzugsrichtung der Folienbahn verlaufenden Eckschweißnähten in den Seitenfalten in einer Draufsicht;
- Fig. 4:: die Folienbahn von den Fig. 1 bis 3 zusammen mit zwei weiteren jeweils als mitlaufendes Teflonband ausgebildeten Zwischenlagen beim Herstellen von quer zur Vorzugsrichtung der Folienbahn in äußeren Segmenten verlaufenden Querschweißnähten in einer Draufsicht;
- Fig. 5:: die Folienbahn von den Fig. 1 bis 4 zusammen mit einer weiteren als mitlaufendes Teflonband ausgebildeten Zwischenlage beim Herstellen von quer zur Vorzugsrichtung des Folienbahn verlaufenden weiteren Querschweißnähten und zur Ausbildung eines Griffbereiches diagonal zur Vorzugsrichtung der Folienbahn verlaufenden weiteren Eckschweißnähten in einer Draufsicht;
- Fig. 6:: eine Flachbahn zur Herstellung von zwei Deckblattbahnen mit Ausstanzungen in den Ecken des Kopfbereichs von aus den Deckblattbahnen herzustellenden Deckblättern in einer Draufsicht;
- Fig. 7:: die Folienbahn von den Fig. 1 bis 5 und die Deckblattbahnen von Fig. 6 beim beidseitigen Zuführen jeweils einer der Deckblattbahnen zur Folienbahn in perspektivischer Ansicht;
- Fig. 8:: die Folienbahn mit den Deckblattbahnen von Fig. 7 beim Befestigen der Deckblattbahnen an der Folienbahn mittels Querschweißungen in einer Draufsicht;
- Fig. 9:: die Folienbahn mit den Deckblattbahnen von den Fig. 7 und 8 beim weiteren Befestigen der Deckblattbahnen an der Folienbahn mittels Längsschweißungen und Punktschweißungen in einer Draufsicht;
- Fig. 10:: die Folienbahn mit den an der Folienbahn befestigten Deckblattbahnen von Fig. 9 bei einem Randbeschnitt in perspektivischer Ansicht;
- Fig. 11:: die Folienbahn mit den an der Folienbahn befestigten Deckblattbahnen nach dem Randbeschnitt gemäß Fig. 10 beim Herstellen von Ausstanzungen zum Herstellen abgerundeter Ecken im Fußbereich der herzustellenden Folienbeutel in perspektivischer Ansicht;
- Fig. 12:: die Folienbahn mit an der Folienbahn befestigten Deckblattbahnen und den Ausstanzungen von Fig. 11 beim Trennen von Beutelabschnittsbahnen durch Abziehen eines Längsbeschnittstreifens in einer Draufsicht;
- Fig. 13:: das Trennen der Beutelabschnittsbahnen von Fig. 12 in perspektivischer Ansicht;
- Fig. 14:: die Beutelabschnittsbahnen von Fig. 13 in einer Draufsicht;
- Fig. 15:: einen aus einer der Beutelabschnittsbahnen von Fig. 14 vereinzelten Folienbeutel in einer Draufsicht; und
- Fig. 16:: den Folienbeutel von Fig. 15 mit einem Ausgießer in perspektivischer Explosionsdarstellung.

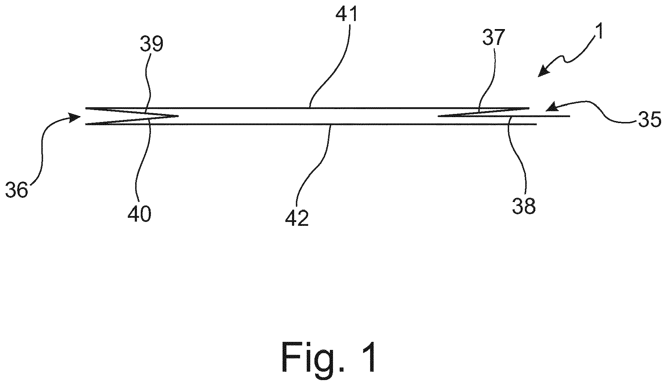

Fig. 1 zeigt eine Folienbahn 1, welche zum Herstellen eines Innenbeutels in einem erfindungsgemäßen Verfahren zum Herstellen von Folienbeuteln, welche einen derartigen Innenbeutel aufweisen, verwendet wird. Die Folienbahn 1 ist in der Darstellung gemäß Fig. 1 bereits mehrfach gefaltet, um einen Seitenfaltenschlauch zu bilden. Die Folienbahn 1 weist hierbei eine erste äußere Lage 41 und eine zweite äußere Lage 42 auf. Durch das Falten der Folienbahn 1 sind ferner eine erste Seitenfalte 35 und eine zweite Seitenfalte 36 gebildet. In der ersten Seitenfalte 35 bildet die Folienbahn 1 eine erste innere Lage 37 und eine zweite innere Lage 38 aus. In der zweiten Seitenfalte 36 bildet die Folienbahn 1 eine dritte innere Lage 39 und eine vierte innere Lage 40 aus. Die inneren Lagen 37, 38, 39, und 40 sind zwischen den äußeren Lagen 41 und 42 angeordnet, insbesondere wenn der Seitenfaltenschlauch durch Verbinden der zweiten inneren Lage 38 mit der zweiten äußeren Lage 42 im Bereich der ersten Seitenfalte 35 geschlossen ist.

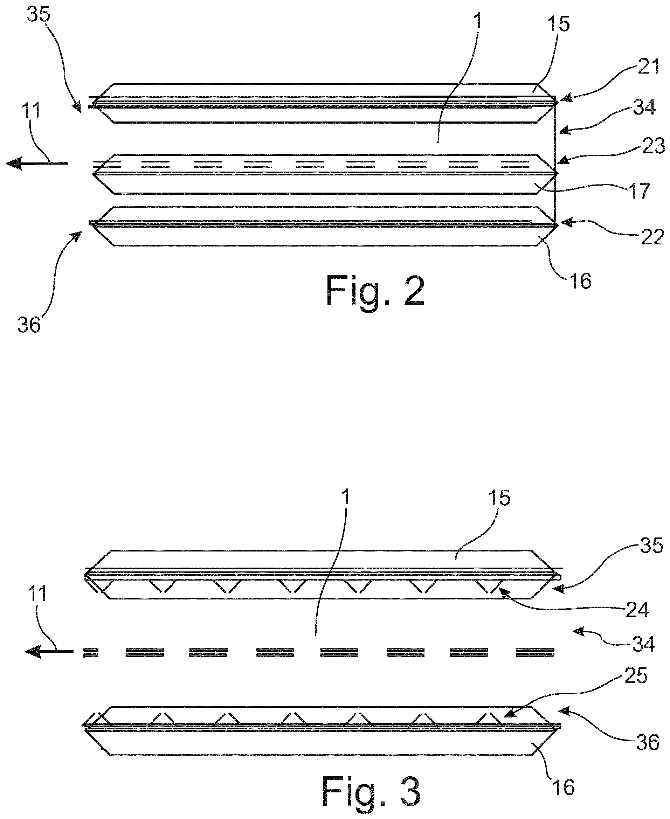

Fig. 2 zeigt das Einbringen von ersten Längsschweißnähten 21 im Bereich der ersten Bodenfalte 35 sowie von zweiten Längsschweißnähten 22 im Bereich der zweiten Seitenfalte 36. Die Seitenfalten 35 und 36 bilden später die Böden der herzustellenden Folienbeutel 9 aus. Die erste Längsschweißnähte 21 und die zweiten Längsschweißnähte 22 sind somit Bodenschweißungen. Hierbei verbinden die ersten Längsschweißnähte 21 die erste innere Lage 37 mit der ersten äußeren Lage 41 und die zweite innere Lage 38 mit der zweiten äußeren Lage 42, womit zugleich die Folienbahn 1 schlauchförmig geschlossen und damit der bereits genannte und hier erstmals bezeichnete Seitenfaltenschlauch 34 hergestellt ist. Die zweiten Längsschweißnähte 22 verbinden entsprechend die dritte innere Lage 39 mit der ersten äußeren Lage 41 und die vierte innere Lage 40 mit der zweiten äußeren Lage 42.

Die Folienbahn 1 wird in einer Vorzugsrichtung 11 der Folienbahn 1 bewegt, insbesondere vorgezogen, wobei die Folienbahn 1 vorzugsweise auf Rollen oder Förderbändern aufliegt. Vorzugsweise wird die Folienbahn 1 während des Schweißvorgangs nicht bewegt. Auch unmittelbar nach dem Schweißvorgang wird vorzugsweise noch eine definierte Zeitdauer gewartet, bis die Folienbahn 1 weiterbewegt wird, damit die Folienbahn ausreichend abkühlen kann, um zugstabil weiterbefördert zu werden. Gleiches gilt auch für weitere Schweißvorgänge.

Um zu verhindern, dass während des Schweißvorgangs die erste innere Lage 37 und die zweite innere Lage 38 im Bereich der ersten Seitenfalte 35 miteinander verschweißt werden, wird für den Schweißvorgang eine erste Zwischenlage 15 zwischen der ersten inneren Lage 37 und der zweiten inneren Lage 38 zumindest in dem Bereich, in welchem die Schweißungen erfolgen, angeordnet. Entsprechend wird auch zwischen der dritten inneren Lage 35 und der vierten inneren Lage 40 im Bereich der zweiten Seitenfalte 36 eine zweite Zwischen Lage 16 während des Schweißvorgangs angeordnet. Die äußeren Lagen 41 und 42 werden entweder zugleich oder nacheinander mit den jeweiligen inneren Lagen 37 und 39 bzw. 38 und 40 verschweißt. Im Falle von nacheinander erfolgenden Schweißvorgängen können die erste Zwischenlage 15 und die zweite Zwischenlage 16 gegebenenfalls nur für den ersten Schweißvorgang benutzt und für den zweiten Schweißvorgang weitere erste und zweite Zwischenlagen verwendet werden.

Die erste Zwischenlage 15 und die zweite Zwischenlage 16 sowie alle weiteren nachfolgend beschriebenen Zwischenlagen sind zwar als Teflonbänder ausgebildet, welche einem Anhaften der Folienbahn 1 entgegenwirken. Dennoch kann die Folienbahn 1 nach dem jeweiligen Schweißvorgang an der ersten Zwischenlage 15, der zweiten Zwischenlage 16 oder einer anderen Zwischenlage haften. Die jeweilige Zwischenlage 15, 16 wird daher nach dem Schweißvorgang über jeweils eine sogenannte erste Rolle von der Folienbahn 1 abgelenkt. Die jeweilige erste Rolle ist hierbei schräg zur Vorzugsrichtung 11 ausgerichtet, so dass sich die auf die beim Ablösen auf die Folienbahn 1 wirkenden Kräfte über einen größeren Bereich in Vorzugsrichtung 11 verteilen. Die Zwischenlagen 15, 16 sowie die weiteren hier noch nicht bezeichneten Zwischenlagen sind als ringförmig geschlossene Bänder ausgebildet. Jede Zwischenlage 15, 16 wird durch die erste Rolle, durch welche die Zwischenlage 15, 16 von der Folienbahn 1 gelöst wird, in eine Richtung senkrecht zur Vorzugsrichtung 11 und dabei parallel zu den äußeren Lagen 41 und 42 der Folienbahn 1 umgelenkt. Nachfolgend erfolgt jeweils eine zweite Umlenkung um eine zweite Rolle, deren Drehachse wie die Drehachse der ersten Rolle parallel zu den äußeren Lagen 41 und 42 der Folienbahn 1, jedoch um 90° gedreht in Bezug auf die Drehachse der ersten Rolle angeordnet ist. Dadurch wird die jeweilige Zwischenlage 15, 16 derart umgelenkt, dass diese Zwischenlage 15, 16 in Gegenrichtung zur Vorzugsrichtung 11 der Folienbahn zurückgeführt wird. Dort wird die Zwischenlage 15, 16 durch entsprechendes zweitmaliges Umlenken um eine dritte Rolle und eine vierte Rolle wieder an die Folienbahn 1 zurückgeführt.

Ein weiteres derartiges Band bildet eine dritte Zwischenlage 17 aus, welche jedoch nicht zwischen den inneren Lagen 37, 38, 39, 40 der Folienbahn 1 positioniert wird, sondern unterhalb der zweiten äußeren Lage 42 mit der Folienbahn 1 mitläuft und dadurch eine Zwischenlage zwischen der zweiten äußeren Lage 42 und einer Unterlage, beispielsweise einem Förderband oder einer Förderrolle, herstellt und verhindert, dass die Folienbahn 1 beim Herstellen von dritten Längsschweißnähten 23 mit der jeweiligen Unterlage verklebt. Die dritten Längsschweißnähte 23 sind Kopfschweißungen für die herzustellenden Folienbeutel. Die dritten Längsschweißnähte 23 sind dabei im Gegensatz zu den ersten Längsschweißnähten 21 und den zweiten Längsschweißnähten 22 keine durchgehenden Schweißungen, sondern lediglich abschnittsweise in der Folienbahn 1 hergestellt, wobei jedem herzustellenden Folienbeutel 9 eine dritte Längsschweißnaht 23 zugeordnet ist. In den Lücken zwischen den einzelnen dritten Längsschweißnähten 23 in Vorzugsrichtung 11 der Folienbahn 1 werden später Ecken der Folienbeutel 9 ausgebildet. Die dritten Längsschweißnähte 23 verschweißen die äußeren Lagen 41 und 42 miteinander.

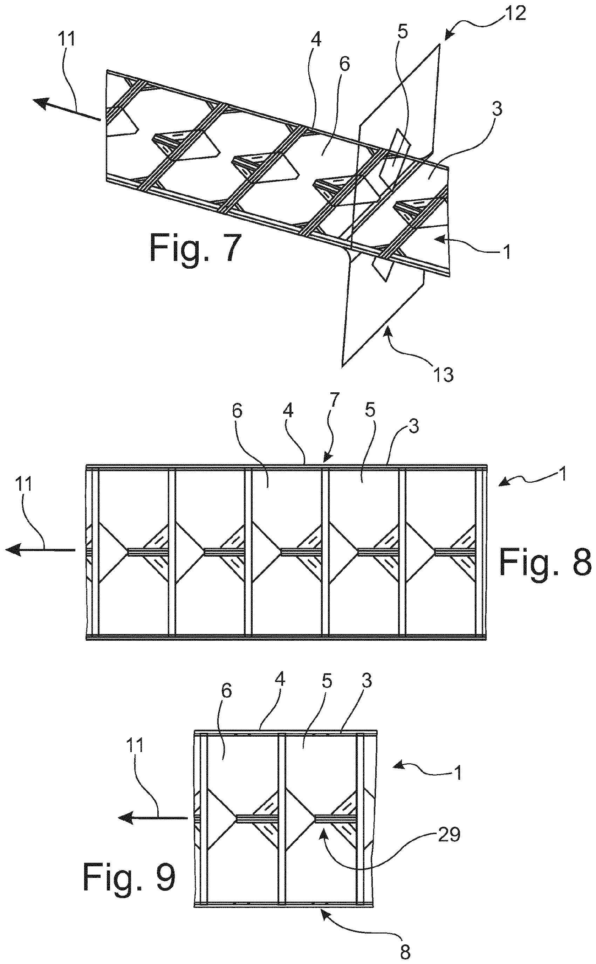

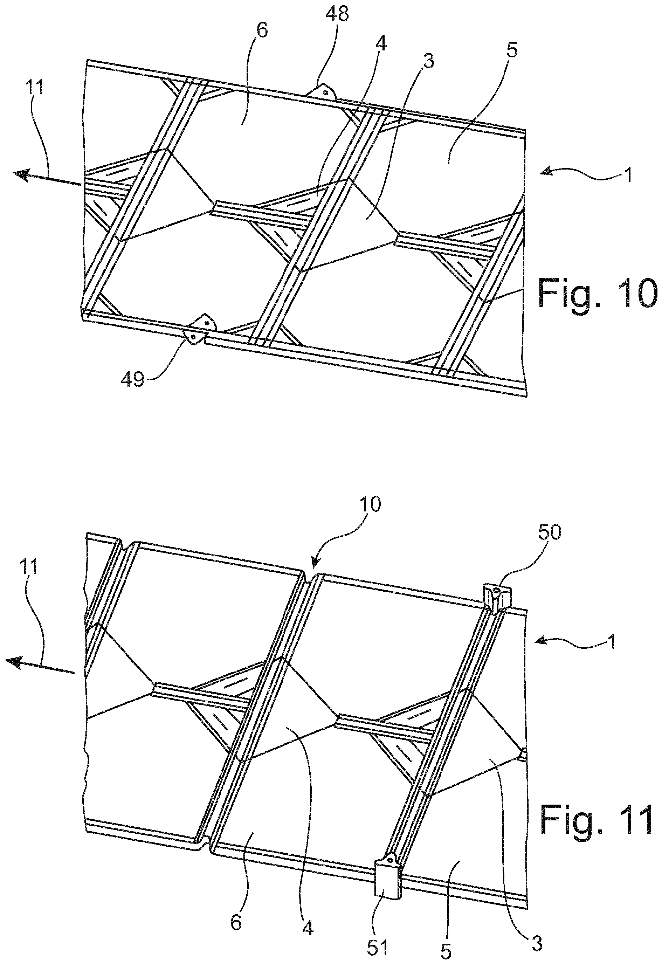

Die dritten Längsschweißnähte 23 sind paarweise parallel zueinander angeordnet, da aus der Folienbahn 1 zwei Reihen von Innenbeuteln hergestellt werden, welche im Bereich der Längsschweißnähte 23 in Fig. 2 noch miteinander verbunden sind. Bei jedem Schweißvorgang werden gleichzeitig zwei Paar von Längsschweißnähten 23 hergestellt, werden also zugleich die Längsschweißnähte 23 von vier Folienbeuteln hergestellt. Durch das gleichzeitige Herstellen von Schweißnähten für zwei in Vorzugsrichtung hintereinander angeordnete Folienbeutel verdoppelt sich der Vorzugsweg und halbiert sich die Häufigkeit der Vorzüge in Vorzugsrichtung 11 bei im Mittel gleicher Bahngeschwindigkeit gegenüber einer gewöhnlichen Taktung, bei welcher Schweißnähte für lediglich einen Folienbeutel in Vorzugsrichtung 11 zeitgleich hergestellt werden. Dies führt dazu, dass die Folienbahn 1 ausreichend Zeit zum Abkühlen hat, bevor die Folienbahn 1 in Vorzugsrichtung 11 weiter bewegt wird. Dadurch wird ein zugstabiles Bewegen der Folienbahn in Vorzugsrichtung 11 möglich. Diese Taktung wird vorzugsweise für alle Schweißvorgänge in der Folienbahn 1 zumindest vor dem Zusammenführen mit Deckblattbahnen oder alternativ bis nach dem Verschweißen oder Verkleben mit den Deckblattbahnen, jedoch bis vor einem Randbeschnitt gemäß Fig. 10 beibehalten. Nach den genannten Schweißvorgängen oder Klebevorgängen wird hingegen der Takt in den Normaltakt geändert, insbesondere ab einem Verbinden der Folienbahn 1 mit Deckblattbahnen gemäß Fig. 8 oder ab dem Herstellen von Ausstanzungen gemäß Fig. 11. Dadurch werden Schnitt- und Stanzwerkzeuge nicht in doppelter Ausführung benötigt.

Fig. 3 zeigt das Herstellen von Abschrägungen an den unteren Ecken der herzustellenden Folienbeutel. Hierfür werden erste Eckschweißnähte 24, welche an die ersten Längsschweißnähte 21 anschließen, und zweite Eckschweißnähte 25, welche an die zweiten Längsschweißnähte 22 anschließen, in die Folienbahn 1 eingebracht. Um ein Verbinden der inneren Lagen 37 und 38 miteinander oder der inneren Lagen 39 und 40 miteinander zu verhindern, ist dabei weiterhin die erste Zwischenlage 15 zwischen den inneren Lagen 37 und 38 angeordnet und die zweite Zwischenlage 16 zwischen den inneren Lagen 38 und 39 angeordnet. Alternativ werden die Zwischenlagen 15 und 16 vor dem Schweißvorgang gemäß Fig. 3 von der Folienbahn 1 gelöst und werden weitere, hier nicht dargestellte Zwischenlagen anstelle der Zwischenlagen 15 und 16 in die Seitenfalten 35 und 36 für den Schweißvorgang gemäß Fig. 3 eingebracht. Die Eckschweißnähte 24 und 25 sind schräg, insbesondere in einem Winkel von 45°, zur Vorzugsrichtung 11 der Folienbahn 1 angeordnet.

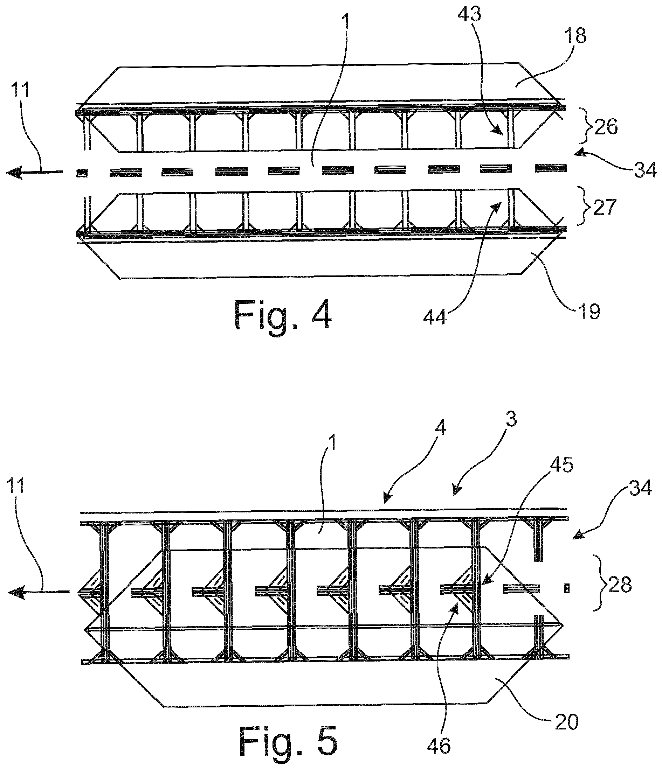

Fig. 4 zeigt das Einbringen von ersten Querschweißnähten 43 und weiteren ersten Querschweißnähten 44 in die Folienbahn 1. Die ersten Querschweißnähte 43 und 44 sind quer zur Vorzugsrichtung 11 angeordnet. Dabei bilden die ersten Querschweißnähte 43 in einem ersten Segment 26 und die weiteren ersten Querschweißnähte 44 in einem weiteren ersten Segment 27 Seitennähte der Innenbeutel für die herzustellenden Folienbeutel aus, wobei sich die Seitennähte vom jeweiligen Fußbereich des Folienbeutels in Richtung des Kopfbereiches erstrecken, jedoch nicht bis in den Kopfbereich reichen.

Zumindest im Bereich des ersten Segmentes 26 liegt die Folienbahn 1 auf einer vierten Zwischenlage 18 auf. Zumindest im weiteren ersten Segment 27 liegt die Folienbahn 1 auf einer fünften Zwischenlage 19 auf. Die Zwischenlagen 18 und 19 sind entsprechend der dritten Zwischenlage 17 ausgebildet und geführt, dabei jedoch an die Breite der ersten Segmente 26 und 27 angepasst.

Fig. 5 zeigt das Einbringen von zweiten Querschweißnähten 45 und weiteren Eckschweißnähten 46 in die Folienbahn 1. Die zweiten Querschweißnähte 45 verbinden dabei die ersten Querschweißnähte 43 mit den weiteren ersten Querschweißnähten 44, so dass insgesamt Querschweißnähte hergestellt sind, welche von den ersten Längsschweißnähten 21 bis zu den zweiten Längsschweißnähten 22 reichen. Die zweiten Querschweißnähte 45 und die weiteren Eckschweißnähte 46 befinden sich dabei in einem zweiten Segment 28, welches zwischen den Segmenten 26 und 27 angeordnet ist. Dadurch, dass zunächst nur Schweißungen in den ersten Segmenten 26 und 27 und danach nur Schweißungen im zweiten Segment 28 durchgeführt werden, kann die Folienbahn zunächst im zweiten Segment 28 und danach in den ersten Segmenten 26 und 27 ausreichend kühl und damit zugstabil bleiben, um die Folienbahn 1 zwischen den jeweiligen Schweißvorgängen transportieren zu können.

Die weiteren Eckschweißnähte 46 sind schräg, insbesondere in einem Winkel von 45°, zur Vorzugsrichtung 11 der Folienbahn 1 angeordnet und bilden einen Griffbereich zum Tragen des herzustellenden Folienbeutels aus. Für die erfindungsgemäße Herstellung anderer Folienbeutel können die weiteren Eckschweißnähte 46 und kann damit der Griffbereich auch entfallen.

Für die Schweißungen im zweiten Segment 28 ist zumindest in diesem zweiten Segment 28 unterhalb der Folienbahn 1 eine sechste Zwischenlage 20 in Form eines Teflonbandes angeordnet, welches bei jedem Vorzug der Folienbahn 1 zusammen mit der Folienbahn 1 mitbewegt und nach dem Schweißvorgang 1 auf die beschriebene Weise mittels einer Umlenkrolle von der Folienbahn 1 gelöst wird.

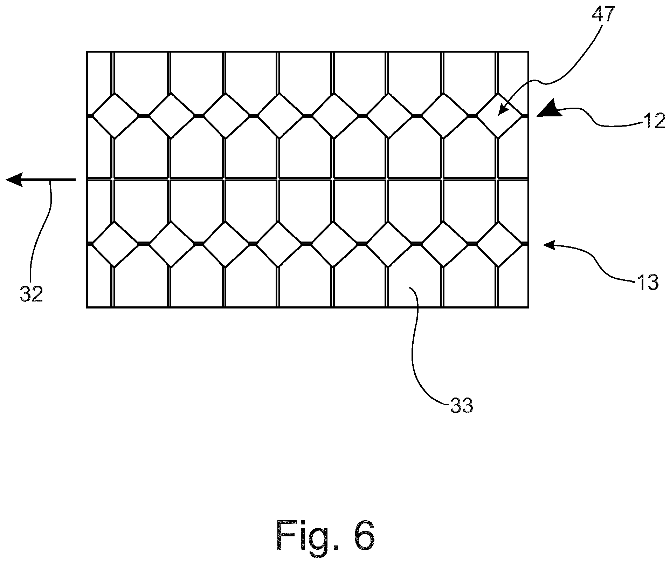

Fig. 6 zeigt eine äußere Flachbahn 33, welche bereits bedruckt ist und aus welcher Deckblätter für die herzustellenden Folienbeutel gebildet werden. Dabei werden die Deckblätter paarweise aus zwei Bahnen, nämlich einer ersten Deckblattbahn 12 und einer zweiten Deckblattbahn 13 herausgebildet, wobei die Deckblattbahnen 12 und 13 in der Darstellung gemäß Fig. 6 noch miteinander verbunden sind. Eine Vorzugsrichtung der Deckblattbahnen 12 und 13 ist in der Darstellung gemäß Fig. 6 mit einem Pfeil gekennzeichnet und mit dem Bezugszeichen 32 benannt. Aus jeder Deckblattbahn 12, 13 werden in Vorzugsrichtung 32 der Deckblattbahnen 12, 13 jeweils zwei Reihen von Deckblättern ausgebildet. Zwischen den Reihen von Deckblättern sind in die äußere Flachbahn 33 Deckblattbahnausstanzungen 47 eingebracht, welche im Kopfbereich der herzustellenden Deckblätter angeordnet sind und mittels welchen in diesem Kopfbereich der Deckblätter die Ecken entfernt oder abgeschrägt sind. Die Deckblattbahnausstanzungen 47 sind dabei vorzugsweise quadratisch, wobei hierdurch jedes auszubildende Deckblatt im Kopfbereich zwei Kanten aufweist, welche jeweils in etwa 45° gegenüber der Vorzugsrichtung 32 der Deckblattbahnen 12, 13 und 90° relativ zueinander geneigt sind. die Deckblattbahnen 12 und 13 werden nachfolgend durch einen Längsschnitt voneinander getrennt.

Fig. 7 zeigt die voneinander getrennten Deckblattbahnen 12 und 13 beim Aufbringen auf die Folienbahn 1. Das Aufbringen erfolgt passgenau. Hierfür ist vorzugsweise eine Steuerung des Bahnvorzugs der Folienbahn 1 sowie des Bahnvorzugs der Deckblattbahnen 12 und 13 mittels Druckmarken vorgesehen, welche jeweils auf Abschnitten der Folienbahn bzw. der Deckblattbahnen angeordnet sind, die nachfolgend durch Beschnitte oder Ausstanzungen entfernt werden. Auf den Deckblattblattbahnen 12 und 13 können die Druckmarken gegebenenfalls auch in einem am herzustellenden Folienbeutel verbleibenden Abschnitt angebracht sein. Die jeweiligen Druckmarken werden jeweils mittels wenigstens eines Sensors erkannt. Eine aktive Bahnsteuerung sorgt dafür, dass sowohl der Vorzugsweg in Vorzugsrichtung 11 der Folienbahn 1 bzw. in Vorzugsrichtung 32 der Deckblattbahnen 12 und 13 sowie die Querposition der Folienbahn 1 bzw. der Deckblattbahnen 12 und 13 mit Hilfe der Druckmarken geregelt wird. Ein erstes Deckblatt, welches in der Darstellung gemäß Fig. 7 gerade auf die Folienbahn 1 aufgebracht wird, ist mit dem Bezugszeichen 5 bezeichnet. Ein mit dem Bezugszeichen 6 bezeichnetes zweites Deckblatt liegt bereits an vorgegebener Stelle auf der Folienbahn 1 auf. Dabei wird das erste Deckblatt 5 mit einem ersten Beutelabschnitt 3 der Folienbahn 1 in Anlage gebracht. Das zweite Deckblatt 6 liegt bereits an einem zweiten Beutelabschnitt 4 der Folienbahn 1 an.

Fig. 8 zeigt das Befestigen der Deckblattbahnen 12 und 13 an der zwischen den Deckblattbahnen 12 und 13 liegenden Folienbahn 1 mittels Querschweißungen 7 quer zur Vorzugsrichtung 11 der Folienbahn 1, welche hier und weiterhin mit der Vorzugsrichtung 32 der Deckblattbahnen 12 und 13 zusammenfällt. Die Querschweißungen 7 sind hierbei in etwa in den Bereichen der ersten Querschweißnähte 43 und 44 in der zwischen den Deckblattbahnen 12 und 13 liegenden Folienbahn 1 angeordnet.

Fig. 9 zeigt das weitere Verbinden der Deckblattbahnen 12 und 13 in jedem herzustellenden Beutelabschnitt 3, 4 mittels Punktschweißungen 8 im Fußbereich des herzustellenden Folienbeutels sowie mittels Längsschweißungen 29 im Kopfbereich des herzustellenden Folienbeutels. Die Längsschweißungen 29 sind dabei in etwa im Bereich der als Kopfschweißungen ausgebildeten dritten Längsschweißnähte in der Folienbahn 1 angeordnet. Die Punktschweißungen 8 sorgen dafür, dass beim später hergestellten Folienbeutel 9 die beidseitig angeordneten Deckblätter 5, 6 leicht vom aus der Folienbahn 1 gebildeten Innenbeutel 2 entfernt werden können, so dass ein Ansatzpunkt zum Abreißen der Deckblätter 5, 6 vom jeweiligen Innenbeutel 2 durch Aufreißen der Querschweißungen 7 und der Längsschweißungen 29 besteht.

Fig. 10 zeigt die Folienbahn 1 mit den mit der Folienbahn 1 verbundenen Deckblattbahnen 12 und 13 bei einem Randbeschnitt. Dabei schneidet ein erstes Schneidwerkzeug 48 einen Randstreifen von den als Siegelnähten ausgeführten ersten Längsschweißnähten 21 ab. Ein zweites Schneidwerkzeug 49 beschneidet die ebenfalls als Siegelnähte ausgeführten zweiten Längsschweißnähte 22 in der Folienbahn 1.

Fig. 11 zeigt das Herstellen von Ausstanzungen 10 im Fußbereich der herzustellenden Folienbeutel. Die Ausstanzungen 10 werden mittels eines erstes Stanzwerkzeugs 50 im Bereich der ersten Seitenfalte 35 und mittels eines zweiten Stanzwerkzeugs 51 im Bereich der zweiten Seitenfalte 36 hergestellt. Dabei werden die Ecken vom Boden zu den Seiten der herzustellenden Folienbeutel 9 abgerundet.

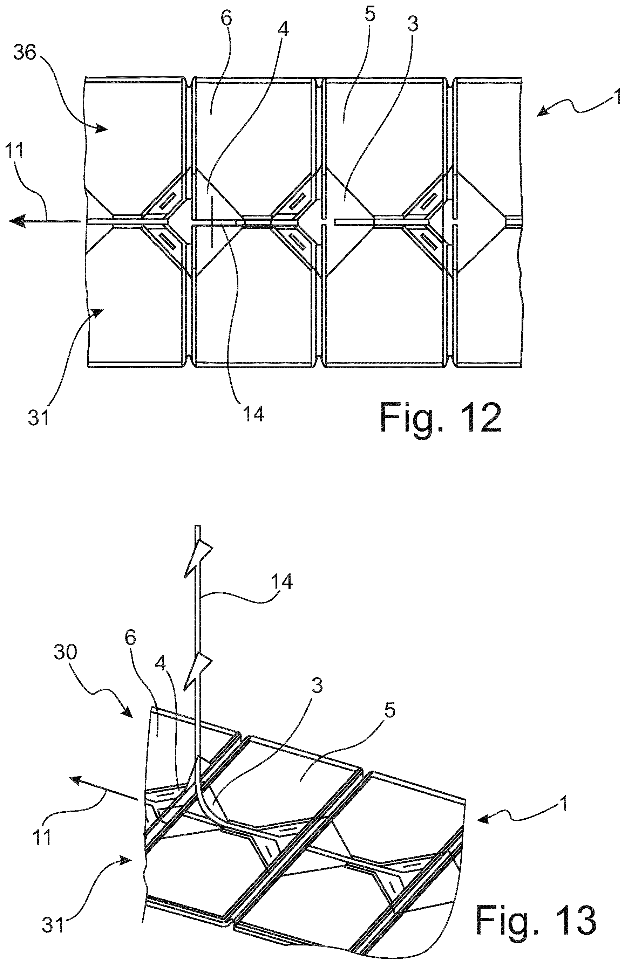

Fig. 12 und Fig. 13 zeigen das Abziehen eines Längsbeschnittstreifens 14 aus verschiedenen Perspektiven. Der Längsbeschnittstreifen 14 wird durch Ausstanzungen oder Schnitte oder eine Kombination von Ausstanzungen und Schnitten zwischen den in ihren Kopfbereichen bezogen auf die Vorzugsrichtung 11 nebeneinander liegenden Beutelabschnitten 3, 4 sowie Deckblättern 5, 6 hergestellt. Insbesondere stellt ein Querschneider einen 10 mm breiten und abschnittsweise für einen Beschnitt der Ecken im Kopfbereich der herzustellenden Folienbeutel auch breiteren Trennschnitt her. Durch Abziehen des Längsbeschnittstreifens 14 entstehen 2 voneinander getrennte Bahnen von Beutelabschnitten 3, 4, nämlich eine erste Beutelabschnittsbahn 30 und eine zweite Beutelabschnittsbahn 31.

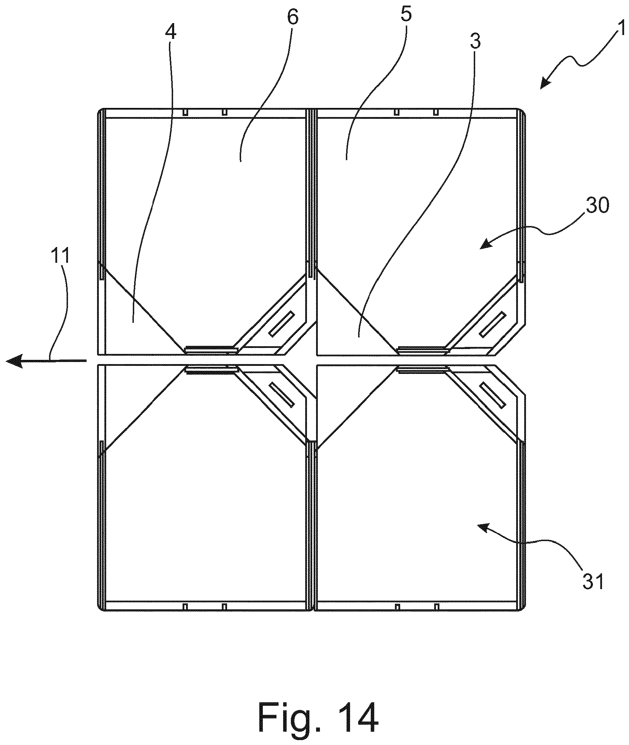

Fig. 14 zeigt einen Ausschnitt der somit hergestellten Beutelabschnittsbahnen 30 und 31. Jede Beutelabschnittsbahn 30, 31 weist eine Reihe von seitlich noch miteinander verbundenen Folienbeuteln auf. Die einzelnen Folienbeutel können durch Querschnitte zwischen den quer zur Vorzugsrichtung 11 verlaufenden Querschweißnähten 43, 44 und 45 von den Beutelabschnittsbahnen 30 und 31 abgetrennt werden.

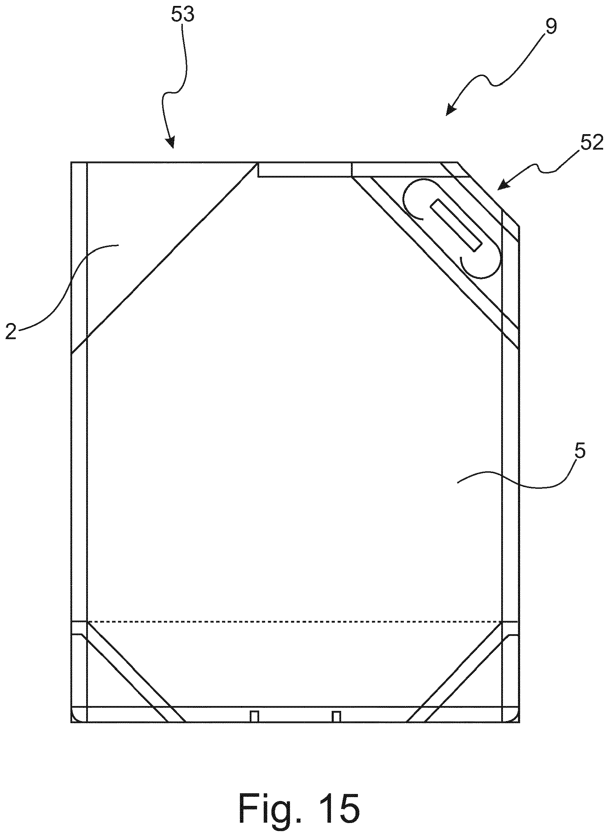

Fig. 15 zeigt einen derart abgetrennten erfindungsgemäßen Folienbeutel 9 mit einem Griffbereich 52 und mit einer Öffnung 53, in welche optional ein Verschluss, wie beispielsweise ein Ausgießer, eingeschweißt werden kann. Von der Folienbahn 1 ist der bereits genannte und hier erstmals mit dem Bezugszeichen 2 bezeichnete Innenbeutel des Folienbeutels 9 ausgebildet. Am Innenbeutel 2 ist das Deckblatt 5 sowie ein weiteres Deckblatt rückseitig und daher in Fig. 15 nicht sichtbar jeweils lösbar befestigt. Dadurch ist eine sortenreine Wiederverwendung des Innenbeutels 2 nach Abreißen des ersten Deckblattes 5 sowie des rückseitigen Deckblattes gewährleistet.

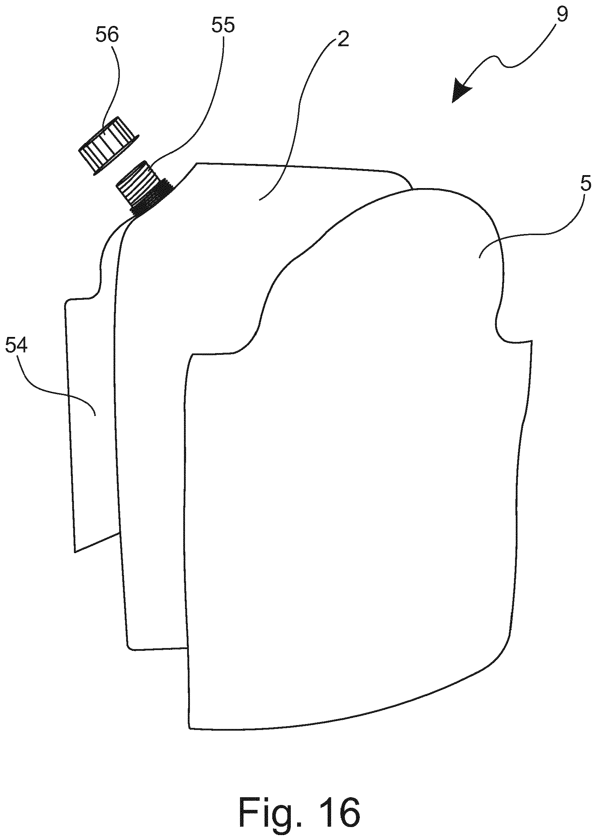

Fig. 16 zeigt den Folienbeutel 9 mit dem hier mit dem Bezugszeichen 54 bezeichneten rückseitigen Deckblatt und einem Ausgießer 55, welcher mit einem Schraubverschluss 56 verschließbar ist, in einer Explosionsdarstellung. Der Ausgießer 55 ist dabei, insbesondere nach dem Befüllen des Folienbeutels 9, in die Öffnung 53 eingebracht und mit den äußeren Lagen 41 und 42 des Innenbeutels 2 verschweißt.

Alle in der vorstehenden Beschreibung und in den Ansprüchen genannten Merkmale sind in einer beliebigen Auswahl mit den Merkmalen der unabhängigen Ansprüche kombinierbar. Die Offenbarung der Erfindung ist somit nicht auf die beschriebenen und/oder beanspruchten Merkmalskombinationen beschränkt, vielmehr sind alle im Rahmen der Erfindung sinnvollen Merkmalskombinationen als offenbart zu betrachten.

### Bezugszeichenliste:

- 1: Folienbahn
- 2: Innenbeutel
- 3: erster Beutelabschnitt
- 4: zweiter Beutelabschnitt
- 5: erstes Deckblatt
- 6: zweites Deckblatt
- 7: Querschweißungen (für Befestigung des Deckblattes)
- 8: Punktschweißungen (für Befestigung des Deckblattes)
- 9: Folienbeutel
- 10: Ausstanzungen (im Fußbereich)
- 11: Vorzugsrichtung (der Folienbahn)
- 12: erste Deckblattbahn
- 13: zweite Deckblattbahn
- 14: Längsbeschnittstreifen
- 15: erste Zwischenlage
- 16: zweite Zwischenlage
- 17: dritte Zwischenlage
- 18: vierte Zwischenlage
- 19: fünfte Zwischenlage
- 20: sechste Zwischenlage
- 21: erste Längsschweißnähte (Bodenschweißungen)
- 22: zweite Längsschweißnähte (Bodenschweißungen)
- 23: dritte Längsschweißnähte (Kopfschweißungen)
- 24: erste Eckschweißnähte
- 25: zweite Eckschweißnähte
- 26: erstes Segment
- 27: weiteres erstes Segment
- 28: zweites Segment
- 29: Längsschweißungen (für Befestigung des Deckblattes)
- 30: erste Beutelabschnittsbahn (mit Beutelabschnitten)
- 31: zweite Beutelabschnittsbahn (mit Beutelabschnitten)
- 32: Vorzugsrichtung (der Deckblattbahn)
- 33: äußere Flachbahn
- 34: Seitenfaltenschlauch
- 35: erste Seitenfalte
- 36: zweite Seitenfalte
- 37: erste innere Lage
- 38: zweite innere Lage
- 39: dritte innere Lage
- 40: vierte innere Lage
- 41: erste äußere Lage
- 42: zweite äußere Lage
- 43: erste Querschweißnähte
- 44: weitere erste Querschweißnähte
- 45: zweite Querschweißnähte
- 46: weitere Eckschweißnähte
- 47: Deckblattbahnausstanzung
- 48: erstes Schneidwerkzeug
- 49: zweites Schneidwerkzeug
- 50: erstes Stanzwerkzeug
- 51: zweites Stanzwerkzeug
- 52: Griffbereich
- 53: Öffnung
- 54: rückseitiges Deckblatt
- 55: Ausgießer
- 56: Schraubverschluss

## Patentansprüche

1. Verfahren zum Herstellen von Folienbeuteln (9), wobei in einer Folienbahn (1) eine Vielzahl von miteinander verbundenen Beutelabschnitten (3, 4) ausgebildet wird, wobei in wenigstens einer Deckblattbahn (12, 13) eine Vielzahl von miteinander verbundenen bedruckten Deckblättern (5, 6) ausgebildet wird, wobei die Deckblattbahn (12, 13) derart in Anlage zur Folienbahn (1) gebracht wird, dass jedes Deckblatt (12, 13) passgenau auf genau einem zugeordneten Beutelabschnitt (3, 4) zu liegen kommt, wobei jedes Deckblatt (12, 13) mittels Deckblattverbindungen (7, 8, 29) mit dem jeweils zugeordneten Beutelabschnitt (3, 4) verbunden wird, wobei die Deckblattverbindungen 7, 8, 29) Querverbindungen (7) in den jeweiligen Seitenbereichen der Deckblätter (5, 6) aufweisen, und wobei einzelne Folienbeutel (9) mit jeweils wenigstens einem Deckblatt (5, 6) und mit einem aus dem jeweils zugeordneten Beutelabschnitt (3, 4) gebildeten Innenbeutel (2) aus den miteinander verbundenen Bahnen herausgetrennt werden,
**dadurch gekennzeichnet,**
**dass** die Deckblattverbindungen (7, 8, 29) Punktverbindungen (8) im jeweiligen Bodenbereich der Deckblätter (5, 6) und jeweils eine Längsverbindung (29) im jeweiligen Kopfbereich der Deckblätter (5, 6) aufweisen.

2. Verfahren nach Anspruch 1, **dadurch gekennzeichnet, dass** die Deckblattverbindungen (7, 8, 29) Schweißungen (7, 8, 29) sind, wobei die Querverbindungen Querschweißungen sind, wobei die Punktverbindungen Punktschweißungen sind und wobei die Längsverbindungen Längsschweißungen sind.

3. Verfahren nach einem der vorherigen Ansprüche, **dadurch gekennzeichnet, dass** nach dem Verbinden der Deckblätter (5, 6) mit den Beutelabschnitten (3, 4) die Folienbeutel (9) ausgeformt werden.

4. Verfahren nach einem der vorherigen Ansprüche, **dadurch gekennzeichnet, dass** aneinander anliegende Lagen (37, 38, 39, 40, 41, 42) der Folienbahn (1) derart miteinander verschweißt werden, dass wenigstens eine, insbesondere als Bodenschweißung (21, 22) oder Kopfschweißung (23) ausgeführte Längsschweißnaht (21, 22, 23), welche in Vorzugsrichtung (11) der Folienbahn (1) verläuft und diese aneinander anliegenden Lagen (37, 38, 39, 40, 41, 42) miteinander verbindet, hergestellt wird.

5. Verfahren nach einem der vorherigen Ansprüche, **dadurch gekennzeichnet, dass** aneinander anliegende Lagen (37, 38, 39, 40, 41, 42) der Folienbahn (1) derart miteinander verschweißt werden, dass Querschweißnähte (43, 44, 45), welche quer zur Vorzugsrichtung (11) der Folienbahn (1) verlaufen und diese aneinander anliegenden Lagen (37, 38, 39, 40, 41, 42) miteinander verbinden, hergestellt werden.

6. Vorrichtung zum Herstellen von Folienbeuteln (1) mit Mitteln zur Durchführung des Verfahrens nach einem der vorherigen Ansprüche.

## Claims

1. A method for manufacturing film bags (9), wherein a plurality of bag portions (3, 4) which are connected to one another are configured in a film web (1), wherein a plurality of printed cover sheets (5, 6) which are connected to one another is configured in at least one cover sheet web (12, 13), wherein the cover sheet web (12, 13) is brought into abutment with the film web (1) such that each cover sheet (12, 13) comes to rest with a precise fit on specifically one assigned bag portion (3, 4), wherein each cover sheet (12, 13) is connected to the respectively assigned bag portion (3, 4) by means of cover sheet connections (7, 8, 29), wherein the cover sheet connections (7, 8, 29) have transverse connections (7) in the respective side regions of the cover sheets (5, 6), and wherein individual film bags (9), with in each case at least one cover sheet (5, 6) and with an inner bag (2) which is formed from the respectively assigned bag portion (3, 4), are separated from the webs which are connected to one another,
**characterized in that**
the cover sheet connections (7, 8, 29) have spot connections (8) in the respective bottom region of the cover sheets (5, 6) and in each case have a longitudinal connection (29) in the respective top region of the cover sheets (5, 6).

2. The method according to Claim 1, **characterized in that** the cover sheet connections (7, 8, 29) are welds (7, 8, 29), wherein the transverse connections are transverse welds, wherein the spot connections are spot welds and wherein the longitudinal connections are longitudinal welds.

3. The method according to one of the preceding claims, **characterized in that** the film bags (9) are formed after the cover sheets (5, 6) have been connected to the bag portions (3, 4).

4. The method according to one of the preceding claims, **characterized in that** layers (37, 38, 39, 40, 41, 42) of the film web (1) bearing against one another are welded to one another such that at least one longitudinal weld seam (21, 22, 23) is produced, said longitudinal weld seam particularly being designed as a bottom weld (21, 22) or top weld (23) and running in the direction of pull (11) of the film web (1) and connecting to one another these layers (37, 38, 39, 40, 41, 42) which bear against one another.

5. The method according to one of the preceding claims, **characterized in that** layers (37, 38, 39, 40, 41, 42) of the film web (1) bearing against one another are welded to one another such that transverse weld seams (43, 44, 45) are produced, said transverse weld seams running transversely to the direction of pull (11) of the film web (1) and connecting to one another these layers (37, 38, 39, 40, 41, 42) which bear against one another.

6. A device for manufacturing film bags (1) comprising means for carrying out the method according to one of the preceding claims.

## Revendications

1. Procédé de fabrication de sachets de film (9), dans lequel une pluralité de sections de sachet (3, 4) reliées entre elles sont formées dans une bande de film (1), dans lequel une pluralité de feuilles de couverture (5, 6) imprimées et reliées entre elles sont formées dans au moins une bande de feuille de couverture (12, 13), dans lequel la bande de feuille de couverture (12, 13) est mise en contact de telle façon avec la bande de film (1), que chaque feuille de couverture (12, 13) s'applique de manière ajustée exactement sur une section de sachet (3, 4) correspondante, dans lequel chaque feuille de couverture (12, 13) est reliée à la section de sachet (3, 4) respectivement correspondante au moyen de liaisons de feuille de couverture (7, 8, 29), dans lequel les liaisons de feuille de couverture (7, 8, 29) présentent des liaisons transversales (7) dans les régions latérales respectives des feuilles de couverture (5, 6), et dans lequel des sachets de film (9) individuels sont séparés, respectivement avec au moins une feuille de couverture (5, 6) et avec un sachet intérieur (2) formé à partir de la sections de sachet (3, 4) respectivement correspondante, à partir des bandes reliées entre elles,
**caractérisé en ce que**
les liaisons de feuille de couverture (7, 8, 29) présentent des liaisons ponctuelles (8) dans la région de fond respective des feuilles de couverture (5, 6) et respectivement une liaison longitudinale (29) dans la région de tête respective des feuilles de couverture (5, 6).

2. Procédé selon la revendication 1, **caractérisé en ce que** les liaisons de feuille de couverture (7, 8, 29) sont des soudures (7, 8, 29), dans lequel les liaisons transversales sont des soudures transversales, dans lequel les liaisons ponctuelles sont des soudures ponctuelles et dans lequel les liaisons longitudinales sont des soudures longitudinales.

3. Procédé selon l'une des revendications précédentes, **caractérisé en ce que** les sachets de film (9) sont formés après l'assemblage des feuilles de couverture (5, 6) avec les sections de sachet (3, 4).

4. Procédé selon l'une des revendications précédentes, **caractérisé en ce que** des couches (37, 38, 39, 40, 41, 42) de la bande de film (1) appliquées les unes sur les autres sont soudées entre elles de manière à réaliser au moins une soudure longitudinale (21, 22, 23) conçue comme en particulier une soudure de fond (21, 22) ou une soudure de tête (23), laquelle s'étend dans la direction de traction (11) de la bande de film (1) et relie entre elles lesdites couches (37, 38, 39, 40, 41, 42) appliquées les unes sur les autres.

5. Procédé selon l'une des revendications précédentes, **caractérisé en ce que** des couches (37, 38, 39, 40, 41, 42) de la bande de film (1) appliquées les unes sur les autres sont soudées entre elles de manière à réaliser des soudures transversales (43, 44, 45) s'étendant transversalement à la direction de traction (11) de la bande de film (1) et reliant entre elles lesdites couches (37, 38, 39, 40, 41, 42) appliquées les unes sur les autres.

6. Dispositif de fabrication de sachets de film (1) avec des moyens pour la mise en œuvre du procédé selon l'une des revendications précédentes.
